# EUROPEAN PATENT APPLICATION

(11) **EP 2 059 074 A1**
(43) Date of publication of application: **13.05.2009**
(21) Application number: 07291635.6
(22) Date of filing: 27.12.2007
(51) Int. Cl.: H04W 4/00

(54) **Method and apparatus for call handover in a telecommunications system**

(30) Priority: 06.11.2007 EP 07291330
(71) Applicant: Alcatel Lucent, 75008 Paris (FR)
(72) Inventor: Dupuy, Pierre, 75017 Paris (FR); Landais, Bruno, 22560 Pleumeur-Bodou (FR)
(74) Representative: Sarup, David Alexander

(57) **Abstract**

A method for call handover from a source cell associated with a first Base Transceiver Station, BTS, to a target cell associated with a second BTS in a telecommunications system, the first BTS and second BTS each including a respective different radio access termination, RAT, function, including the steps of:
directly connecting the first BTS and second BTS; and
handing over from the first BTS to the second BTS using transcoder free operation, TRFO.

## Description

### FIELD OF THE INVENTION

The present invention relates to a method and apparatus for call handover in a telecommunications system.

### BACKGROUND OF THE INVENTION

The 3rd Generation Partnership Project ("3GPP"): Technical Specification Group GERAN, Release 8, is to introduce the transport of voice over IP on the A-interface ("AoIP"). The A-interface is the user plane between a Base Station System ("BSS") and a Media Gateway ("MGW"). It has been proposed that AoIP should use a protocol that is very similar to that of the Nb interface as defined in 3GPP specification TS 29.414 v7.2.0 (2007-03), incorporated herein by way of reference. The Nb interface is the interface used to transfer data, such as voice packets, between MGWs. From a user viewpoint, the AoIP interface between the BSS and the MGW will be almost Nb, that is, the BSS will behave as an MGW. Protocols for transmitting voice packets include Real time Transport Protocol ("RTP"), User Datagram Protocol ("UDP") or Internet Protocol ("IP"), together with Real Time Transport Control Protocol ("RTCP") for control purposes.

In a GSM system, internal, or intra, handover is where handover ("HO") is from one BSS to another BSS and both are controlled by the same BSC. The term also includes handover between different sectors at the same BSS. In an example of internal handover, a mobile terminal ("MS") is currently in communication with a source cell, associated with the source BSS and it is required to transfer it to a target cell associated with a target BSS, which is different from the source BSS in this case. A new channel is set up in a target cell to which the call is to be transferred. Optionally, a Y connection is set up in the BSC to multicast the speech towards both the source and target cells, so as to provide soft HO. An HO command is sent to the MS. When the MS accesses the target cell with the HO access (or when the MS starts sending speech in the target cell), the uplink data path is switched in the BSC to connect the target cell to the transcoder, which is included in the BSS. If HO fails, the BSC just re-establishes the speech path with the source cell, if it has been released, and releases the resources in the target cell.

The introduction of A user plane over IP introduces new network optimization opportunities where the transcoders are removed from the BSS. It then becomes technically feasible to connect the Base Transceiver Station ("BTS") user plane directly to the MGW, with the Base Station Controller ("BSC") acting only as a signalling server.

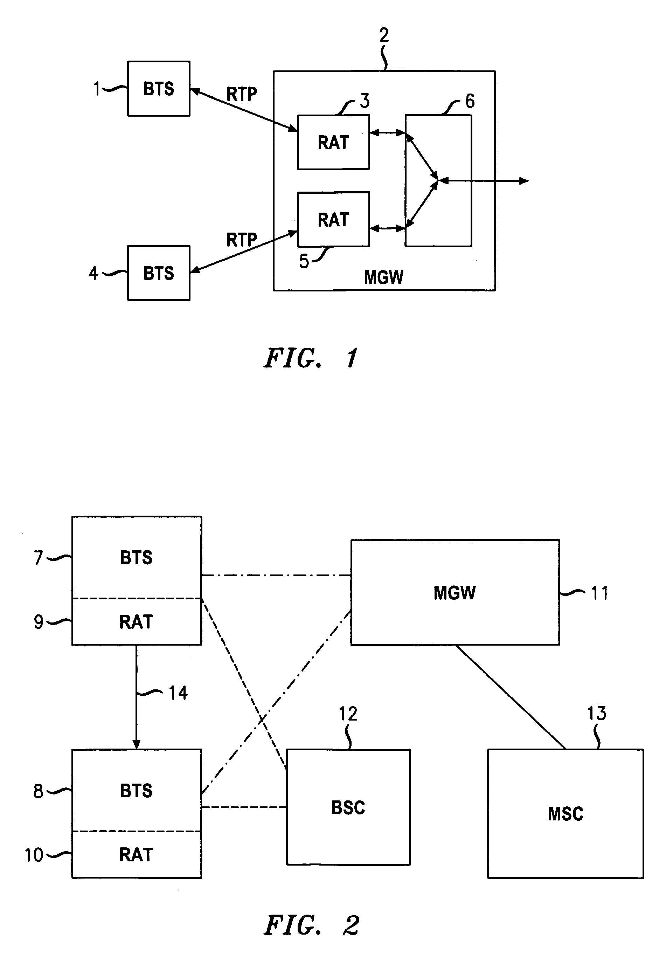

As illustrated in Figure 1, where AoIP is implemented there is a direct connection between the BTS 1 and the MGW 2 (when the transcoders are removed from the BSS) with the BTS 1 having a Radio Access Termination ("RAT") 3 at the MGW 2. Internal HO from the source BTS 1 to a target BTS 4 cannot be handled in the same manner as that set out above, because the two BTSs 1 and 4 involved in the HO cannot share the same IP termination point. Instead, to achieve HO, a new channel is set up in the target cell associated with BTS 4. A new RAT 5 is set up in the MGW 2. Optionally, a Y connection is set up in the MGW 2, as shown at 6 in Figure 1, with the source and target RATs 3 and 4, to multicast the speech towards the two cells. Then the HO command is sent to the MS (or User Equipment ("UE")). When the MS accesses the new cell, the Radio Network Controller ("RNC"), or BSC, sends a message to the Mobile Switching Center ("MSC") server, indicating that the MS has accessed the target cell. The MSC server switches the uplink path from the source RAT 3 to the target RAT 5.

Thus, AoIP intra HO is likely to incur similar delays as are experienced with inter, or external, HO, and hence a longer speech interruption time, due to the necessity to use signalling to switch the Radio Access Terminations. It will also require more transcoding resources than conventional internal BSC handover, and more MSC server processing, as all handovers are essentially external handovers.

### BRIEF SUMMARY OF THE INVENTION

According to a first aspect of the invention, a method for call handover from a source cell associated with a first Base Transceiver Station, BTS, to a target cell associated with a second BTS in a telecommunications system, the first BTS and second BTS each including a respective different radio access termination, RAT, function, includes the steps of: directly connecting the first and second BTS; and handing over from the first BTS to the second BTS using transcoder free operation, TRFO. Thus, the BTS effectively acts as the RAT, and there is 'local routing', where there is no separately provided RAT used to connect the first BTS and second BTS. This is termed transcoder free operation ("TRFO"). The MGW to which the BTSs are connected is not included in the data path. In one method in accordance with the invention, the MGW provides signaling for managing the handover.

A method in accordance with the invention may be particularly applicable to networks implemented according to 3G/LTE standards, but may also be applicable to other types of network and other future specifications.

In one method in accordance with the invention, signaling between the BTSs and the MGW uses Real time Transport Protocol, RTP.

The telecommunications system may be in accordance with 3GPP A-interface over IP, AoIP, specifications. By using the invention, the advantages of AoIP can be realised without the attendant difficulties with HO as previously described

According to one method in accordance with the invention, information from the reception of at least one good voice packet is used to set call parameters. The call parameters may include at least one of: which codec to use in the downlink direction; and which uplink connection should be used for the uplink voice generation.

According to a second aspect of the invention, a telecommunications system operates in accordance with a method in accordance with first aspect the invention.

According to a third aspect of the invention, a telecommunications system comprises: a first Base Transceiver Station, BTS; a second BTS, the first BTS and second BTS each including a respective different radio access termination, RAT, function; and, during handover, providing a direct connection between the first BTS and second BTS; so that handover is carried out using transcoder free operation, TRFO. The telecommunications system may further comprise an MGW connected so that it is not included in the data path between the first and second BTS.

### BRIEF DESCRIPTION OF THE DRAWINGS

Some methods and embodiments in accordance with the present invention are now described by way of example only, and with reference to the accompanying drawings, in which:
Figure 1 schematically illustrates a previous proposal; and
Figure 2 schematically illustrates a system in accordance with the invention.

### DETAILED DESCRIPTION

With reference to Figure 2, handover is required from a first, source, cell associated with a first BTS 7 to a second, target, cell associated with a second BTS 8. Each BTS 7 and 8 incorporates a RAT function, shown as 9 and 10 respectively, effectively avoiding the need to use additionally provided RATs. Prior to handover, there is no connection existing between the two BTS 7 and 8. An MGW 11 is connected to the two BTS 7 and 8, as is a BSC 12. The MGW 11 is connected to a Mobile Switching Center ("MSC") 13.

For handover, a direct data connection 14 is set up between the BTS 7 for the source cell and the BTS 8 for the target cell, so that TRFO can be implemented. The connection 14 exists between the RATs 9 and 10. The MGW 11 is not included in the data path, but provides signalling together with the BSC 12. The MGW 11 indicates to the MSC 13 server that a handover is prepared, and includes information about the IP address and port of the target radio channel. The MSC 13 server configures the MGW 11 to indicate that the RAT 9 must manage the connection with RAT 10.

As an implementation choice, the RAT 9 can select from the following possibilities: generate the same voice flow towards the source and target cells if they use the same codec; generate two different voice flows when the two channels use different codecs; and generate only one voice flow if the two codecs are different.

To switch from the old channel to the new channel, the RAT 9 waits for the first valid speech block coming from the target cell. This valid speech block may be either a speech frame or a SID frame indicating that no speech is present. As soon as the RAT 9 receives the first valid speech block, it starts generating the speech flow corresponding to the target cell information. 9 The handover process is terminated when the handover has been successfully accomplished or, in case of a handover failure, when information reporting the failure is received at the MSC 13 server from the MGW 11.

The present invention may be embodied in other specific forms without departing from its spirit or essential characteristics. The described embodiments are to be considered in all respects only as illustrative and not restrictive. The scope of the invention is, therefore, indicated by the appended claims rather than by the foregoing description. All changes that come within the meaning and range of equivalency of the claims are to be embraced within their scope.

## Claims

1. A method for call handover from a source cell associated with a first Base Transceiver Station, BTS, to a target cell associated with a second BTS in a telecommunications system, the first BTS and second BTS each including a respective different radio access termination, RAT, function, including the steps of:
directly connecting the first BTS and second BTS; and
handing over from the first BTS to the second BTS using transcoder free operation, TRFO.

2. The method as claimed in claim 1 and including providing signaling from a Media Gateway, MGW, for managing call handover.

3. The method as claimed in claim 2 and including signaling between the BTSs and the MGW using Real time Transport Protocol, RTP.

4. The method as claimed in claim 1, 2 or 3 wherein the telecommunications system is implemented according to 3G/LTE standards.

5. The method as claimed in any preceding claim and wherein the telecommunications system is in accordance with 3GPP A-interface over IP, AoIP, specifications.

6. The method as claimed in any preceding claim and including using information from the reception of at least one good voice packet to set call parameters.

7. The method as claimed in claim 6 wherein the call parameters include at least one of: which codec to use in the downlink direction; and which uplink connection should be used for the uplink voice generation.

8. A telecommunications system operating in accordance with a method as claimed in any preceding claim.

9. A telecommunications system comprising: a first Base Transceiver Station, BTS; a second BTS, the first BTS and second BTS each including a respective different radio access termination, RAT, function; and, during handover, providing a direct connection between the first BTS and second BTS; so that handover is carried out using transcoder free operation, TRFO.

10. The telecommunications system as claimed in claim 9 and comprising an MGW connected so that it is not included in the data path between the first and second BTS.
